# EUROPEAN PATENT APPLICATION

(11) **EP 4 369 707 A1**
(43) Date of publication of application: **15.05.2024**
(21) Application number: 23207579.6
(22) Date of filing: 03.11.2023
(51) Int. Cl.: H04N 9/31

(54) **PROJECTION SYSTEM AND CONTROL METHOD THEREOF**

(30) Priority: 14.11.2022 CN 202211417238
(71) Applicant: Optoma Coporation, New Taipei City 231633 (TW)
(72) Inventor: Tsui, Yuan-Mao, 231633 NEW TAIPEI CITY (TW); Wu, Chia-Chien, 231633 NEW TAIPEI CITY (TW); Yuan, Hsien-Cheng, 231633 NEW TAIPEI CITY (TW); Wang, Wei-Jung, 231633 NEW TAIPEI CITY (TW)
(74) Representative: Ter Meer Steinmeister & Partner

(57) **Abstract**

A projection system and a control method thereof are provided. The projection system includes a projector. The projector comprises a projection module and a processor. The processor is electrically coupled to the projection module. The projector confirms whether a first triggering event is detected and turns on a sleep aid mode in response to the first triggering event. The sleep aid mode corresponds to at least one control parameter. In the sleep aid mode, the projection module plays at least one multimedia file according to the at least one control parameter. The processor adjusts at least one parameter value of the at least one control parameter to adjust the at least one multimedia file correspondingly. The projector confirms whether a second triggering event is detected and the projection module stops playing the at least one multimedia file and turns off the sleep aid mode in response to the second triggering event.

## Description

This application claims the priority benefit of China application serial no. 202211417238.5, filed on November 14, 2022 and China application serial no. 202310081586.8, filed on January 19, 2023.

### Technical Field

The disclosure relates to a projection technology, and more particularly, to a projection system having a sleep aid mode and a control method thereof.

### Background

At present, projectors with the sleep aid function on the market, simply, obtain the data including projection content (such as starry sky images, colors of atmosphere light, or picture book stories) from storage media and project an image according to the data out. The projector does not play customized projection content for specific users. In addition, although some sleep aid applications provide sleep aid solutions, these applications may only be executed on mobile phones.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure provides a projection system and a control method thereof, which may adjust projection content played in a sleep aid mode of a projector, and improve a condition of a user before falling asleep through the projection content.

The object is solved by the features of the independent claims. Preferred embodiments are given in the dependent claims.

A projection system in the disclosure includes the projector. The projector includes a projection module and a processor. The processor is electrically coupled to the projection module. The projector is configured to confirm whether a first triggering event is detected and turn on a sleep aid mode of the projector in response to the first triggering event, wherein the sleep aid mode corresponds to at least one control parameter, and in the sleep aid mode, the projector is configured to enable the projection module to play at least one multimedia file according to the at least one control parameter corresponding to the sleep aid mode, and the projector is configured to enable the processor to adjust at least one parameter value of the at least one control parameter to adjust the at least one multimedia file correspondingly, the projector is configured to confirm whether a second triggering event is detected, and the projector is configured to enable the projection module to stop playing the at least one multimedia file and turn off the sleep aid mode in response to the second triggering event.

In an embodiment of the disclosure, the projection system may further include a wearable device.

The wearable device may be communicatively connected to the projector.

The wearable device may be configured to detect an activity level of a user and may generate a detection signal.

The processor may be configured to adjust the at least one parameter value of the at least one control parameter according to the detection signal.

In an embodiment of the disclosure, the projector may be configured to receive the at least one control parameter of the sleep aid mode from a user terminal device or a cloud server by a wireless communication manner.

In an embodiment of the disclosure, the processor of the projector may be configured to adjust the at least one parameter value of the at least one control parameter according to an execution time of the sleep aid mode.

In an embodiment of the disclosure, the at least one control parameter may include at least one of the following: a color value, a color temperature, illumination, brightness, blue light energy, and sound volume.

In an embodiment of the disclosure, the projector may further include a light source module.

The at least one control parameter may include blue light energy.

In the sleep aid mode, the processor may be configured to control a blue light emitting element of the light source module to adjust at least one parameter value of the blue light energy.

In an embodiment of the disclosure, the first triggering event may include at least one of the following: a detection of an operation on a button, detection of a voice command, and an end of a preset schedule time.

In an embodiment of the disclosure, the projection system may further include a microphone.

The microphone may be communicatively connected to the processor of the projector.

The processor may be configured to detect the voice command through the microphone.

In an embodiment of the disclosure, the button provided by the projector may be a physical button.

The processor may be configured to correspondingly turn on the sleep aid mode in response to detecting the operation of the physical button.

In an embodiment of the disclosure, the second triggering event may include at least one of the following: an end of a preset schedule time, a detection of no user's response and a detection signal corresponding to a variation maintaining in a variation range during a time period.

In an embodiment of the disclosure, the projector may further include a speaker.

The speaker may be electrically coupled to the processor.

The processor may be configured to control the speaker to output an inquiry message according to an execution time of the sleep aid mode.

The processor may be configured to detect the user's response in response to the inquiry message.

In an embodiment of the disclosure, the wearable device may include a sensor to detect the activity level.

The sensor may include at least one of the following: a microphone, a wireless transceiver, an electrode, and an optical sensor.

In an embodiment of the disclosure, the activity level may include at least one of the following: voice volume, a heart rate, a pressure variation of a posture, and a respiratory rate of the user.

In an embodiment of the disclosure, a sensing element may be a pressure sensor.

The pressure sensor may be configured to detect a variation of pressure to generate a detection signal.

In an embodiment of the disclosure, the projector may further comprises at least one of a normal mode, a sleep mode, an assistance mode and a wakeup mode.

In an embodiment of the disclosure, the projector may be configured to execute the assistance mode.

The projector may be configured to project a midnight image or a midnight light beam, and during a time period, a detection signal corresponding to a variation maintains in a variation range such that the projector is configured to execute the sleep mode.

A control method of a projection system in the disclosure may be provided.

A projector of the projection system may include a projection module and a processor.

The processor may be electrically coupled to the projection module.

The control method may include the following. Whether a first triggering event is detected is confirmed. Ahe sleep aid mode may be turned on in response to the first triggering event, wherein the sleep aid mode corresponds to at least one control parameter.

In the sleep aid mode, the projection module may be enabled to play at least one multimedia file according to the at least one control parameter.

The processor may be enabled to adjust at least one parameter value of the at least one control parameter to adjust the at least one multimedia file correspondingly.

Whether a second triggering event is detected may be confirmed.

The projection module may be enabled to stop playing the at least one multimedia file and turn off the sleep aid mode in response to the second triggering event.

In an embodiment of the disclosure, the at least one control parameter of the sleep aid mode may be received from a user terminal device or a cloud server by a wireless communication manner.

In an embodiment of the disclosure, a method in which the processor may adjust the at least one parameter value of the at least one control parameter to adjust the at least one multimedia file correspondingly includes the following.

An activity level of a user may be detected, and a detection signal may be generated. The activity level may include at least one of voice volume, a heart rate, a pressure variation of a posture and a respiratory rate of the user.

The detection signal may be transmitted to the processor, so that the processor may adjust the at least one parameter value of the at least one control parameter according to the detection signal.

In an embodiment of the disclosure, the at least one control parameter may include blue light energy.

A method of enabling the processor to adjust the at least one parameter value of the at least one control parameter to adjust the at least one multimedia file correspondingly may include the following. A blue light emitting element of a light source module of the projection device may be controlled to adjust at least one parameter value of the blue light energy.

In an embodiment of the disclosure, a method of detecting the first triggering event may include at least one of the following: detection of an operation on a button of the projector, detection of a voice command, and an end of a preset schedule time.

In an embodiment of the disclosure, a method of detecting the second triggering event may include at least one of the following: an end of a preset schedule time, detection of no user's response and a detection signal corresponding to a variation maintaining in a variation range during a time period.

In an embodiment of the disclosure, a method of not detecting the user response may include the following.

A speaker of the projector may be controlled to output an inquiry message according to an execution time of the sleep aid mode.

Whether the user response is detected may be detected in response to the inquiry message.

Based on the above, the projection system in the disclosure may adjust the at least one control parameter for playing the at least one multimedia file according to the execution time of the sleep aid mode or the activity level of the user, so as to create a comfortable sleeping environment that is most suitable for the current sleeping condition of the user.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1A is a schematic view of a projection system according to an embodiment of the disclosure.
FIG. 1B is a schematic view of a projection system of another embodiment of the disclosure.
FIG. 2 is a flow chart of a control method according to an embodiment of the disclosure.
FIG. 3 is a flow chart of a control method according to another embodiment of the disclosure.

### DETAILED DESCRIPTION OF DISCLOSED EMBODIMENTS

It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

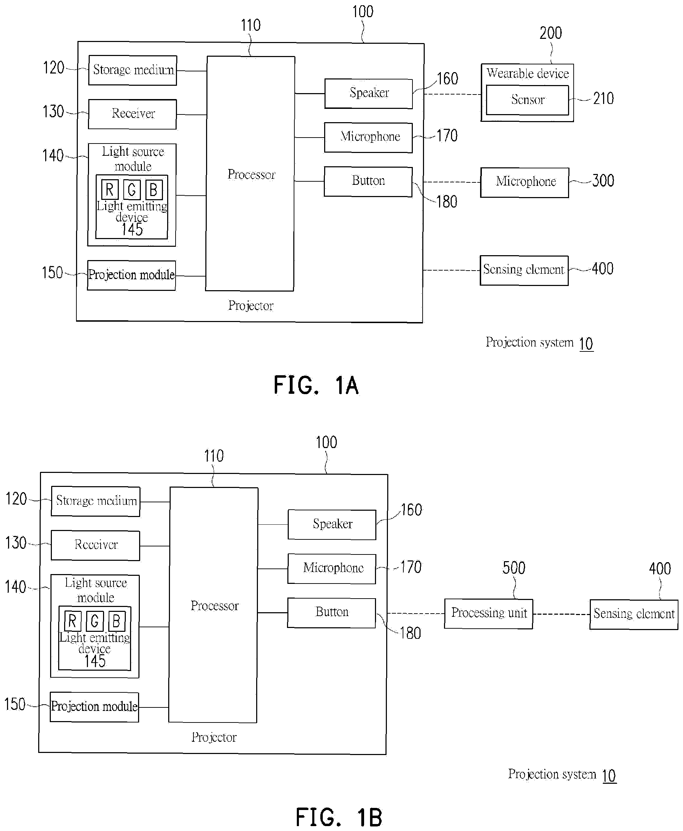

FIG. 1A is a schematic view of a projection system 10 according to an embodiment of the disclosure. The projection system 10 may include a projector 100. The projection system 10 may further include a wearable device 200 and a microphone 300. The projector 100 is communicatively connected to the wearable device 200 and the microphone 300.

The projector 100 may include a processor 110, a storage medium 120, a receiver 130, a light source module 140, and a projection module 150. The projector 100 may further include a speaker 160, a microphone 170, and a physical button 180. The processor 110 may be communicatively connected to the storage medium 120, the receiver 130, the light source module 140, the projection module 150, the speaker 160, the microphone 170, and the physical button 180. In other embodiments, the projection system 10 may use the built-in microphone 170 without disposing the additionally connected microphone 300.

The processor 110 or a processing unit 500 of FIG. 1B is, for example, a central processing unit (CPU), other programmable general purpose or special purpose micro control units (MCUs), a microprocessor, a digital signal processor (DSP), a programmable controller, an application specific integrated circuit (ASIC), a graphics processing unit (GPU), an image signal processor (ISP), an image processing unit (IPU), an arithmetic logic unit (ALU), a complex programmable logic device (CPLD), a field programmable gate array (FPGA), other similar elements, or a combination of the above elements. In the embodiment of the disclosure, the processor 110 may access and execute at least one of a normal mode, a sleep aid mode, a sleep mode, an assistance mode and a wakeup mode, and at least one multimedia file and at least one application stored in the storage medium 120. The at least one multimedia file includes at least one video file and at least one audio file.

The storage medium 120 is, for example, any type of fixed or removable random access memory (RAM), read-only memory (ROM), flash memory, hard disk drive (HDD), solid state drive (SSD), similar elements, or a combination of the above elements, and is used to store at least one of the normal mode, the sleep aid mode, the sleep mode, the assistance mode and the wakeup mode, and the at least one multimedia file and the at least one application that may be executed by the processor 110.

The projector 100 includes a setting mode. The setting mode includes at least one of the normal mode, the sleep aid mode, the sleep mode, the assistance mode and the wakeup mode. The normal mode, sleep aid mode, the sleep mode, the assistance mode and the wakeup mode respectively corresponds to at least one parameter value of at least one control parameter. In other words, each mode comprises at least one parameter value of at least one control parameter. The processor 110 of the projector 100 may control the light source module 140 and/or the projection module 150 to adjust the at least one parameter value of the at least one control parameter of the mode for influencing, projected by the projector 100, brightness, color temperature, content of at least one image of a multimedia file or a projected period.

The at least one control parameter comprises at least one RGB value, at least one color temperature, illumination, brightness, or blue light energy, etc. The at least one control parameter further comprises sound volume of the multimedia file. The processor 110 may control the speaker 160 to adjust at least one parameter value of the sound volume.

A sleep state represents that a user is in one of Non Rapid Eye Movement Sleep (NREM) state and Rapid Eye Movement Sleep (REM) state.

The setting mode of the projector 100 is set to the normal mode. When the user daily uses the projector 100, the projector 100 projects the at least one multimedia file according to the at least one control parameter corresponding to the normal mode for usual using.

The setting mode of the projector 100 is set to the sleep aid mode. When the user is in a state before the sleep sate, the projector 100 turns on the sleep aid mode in response to a first triggering event. The projector 100 projects the at least one multimedia file according to the at least one control parameter corresponding to the sleep aid mode. Wherein the at least one control parameter corresponding to the sleep aid mode is smaller than the at least one control parameter corresponding to the normal mode. For example, brightness of the multimedia file projected by the projector 100 in the sleep aid mode is smaller than brightness of the multimedia file projected by the projector 100 in normal mode. Color temperature of the multimedia file projected by the projector 100 in the sleep aid mode is smaller than color temperature of the multimedia file projected by the projector 100 in normal mode. Sound volume of the multimedia file projected by the projector 100 in the sleep aid mode is smaller than sound volume of the multimedia file projected by the projector 100 in normal mode.

The setting mode of the projector 100 is set to the sleep mode. When the user is in the sleep state, the processor 110 is triggered by a second triggering event and turns off the sleep aid mode to turn on the sleep mode. The projector 100 is in the sleep mode, the projector 100 stops playing the multimedia file and the projector 100 is standby.

The setting mode of the projector 100 is set to the wakeup mode. When the user gets out of the sleep state, the projector 100 projects the at least one multimedia file according to the at least one control parameter corresponding to the wakeup mode.

The receiver 130 receives a signal in a wireless or wired manner. The receiver 130 may further perform operations such as low noise amplification, impedance matching, frequency mixing, upward or downward frequency conversion, filtering, amplification, and the like.

The light source module 140 is used to provide an illumination beam used by the projector 100 to project an image. The light source module 140 may include a light emitting device 145, multiple lenses and/or reflectors for transmitting light beams, a color separation element, a light combining element, a phosphor wheel, a filter wheel, a light homogenizing element, etc. The projection module 150 is, for example, a modulating device comprising a light valve and/or at least one chip and/or at least one electric circuit. The projection module 150 is used to modulate the illumination beam provided by the light source module 140 to form a modulated image projected by the projector 100. The processor 110 may control the light source module 140 and the projection module 150 to play/project at least one multimedia file. In an embodiment, the projection module 150 includes an imaging element and a projection lens. The imaging element may be an element that may generate the image such as a digital micromirror device (DMD), a liquid crystal display element, or a liquid-crystal-on-silicon panel (LCOS Panel), and the projection lens (not shown) is, for example, a combination of one or more optical lenses with diopters. The optical lenses include, for example, various combinations of non-planar lenses such as biconcave lenses, biconvex lenses, concave-convex lenses, convex-concave lenses, plano-convex lenses, and plano-concave lenses. The disclosure does not limit the type and variety of the projection lens. The processor 110 may control the light source module 140 and/or the projection module 150 to adjust at least one parameter value of at least one control parameter.

Specifically, the light emitting device 145 of the light source module 140 may include a red light emitting element R, a green light emitting element G, and a blue light emitting element B to provide red light, green light, and blue light respectively. In another embodiment, the light emitting device 145 may be, for example, a blue laser diode and a phosphor wheel excited by blue laser to generate the red light, the green light, and the blue light at different timings. The above light emitting elements are, for example, light emitting diodes or laser diodes. The processor 110 may transmit a control signal to the light source module 140 to adjust luminous intensity of the light beam output by the light source module 140. The control signal may include, for example, a current value of a pulse-width modulation (PWM) signal. The greater the current value, the greater the luminous intensity of the light beam. The smaller the current value, the smaller the luminous intensity of the light beam. For example, the processor 110 may use the pulse-width modulation signal to control the light emitting device 145 (for example, the light emitting diode or the laser diode) of the light source module 140, so as to adjust the at least one parameter value of the at least one control parameter (for example, the color temperature and/or the blue light energy). In an embodiment, the processor 110 may use different pulse-width modulation signals to control each of the color light emitting elements R, G, and B in the light emitting device of the light source module 140, so as to adjust the at least one parameter value of the at least one control parameter (for example, each of color values). On the other hand, the processor 110 may transmit the control signal to the projection module 150 to change hue, saturation, and gain of a projected image, thereby adjusting the at least one parameter value of the at least one control parameter.

The processor 110 of the projector 10 may obtain, through the receiver 130, data of at least one control parameter of the normal mode, at least one control parameter of the sleep aid mode, at least one control parameter of the sleep mode, at least one control parameter of the assistance mode and at least one control parameter of the wakeup mode. When the projector 100 of the projection system 10 is in the sleep aid mode, the processor 110 of the projector 100 may play/project the at least one multimedia file according to the at least one control parameter of the sleep aid mode, so as to assist the user to enter the sleep state. The at least one multimedia file may be stored in the storage medium 120. In an embodiment, the setting mode of the projector 100 is set to the sleep aid mode, the processor 110 may receive data such as the data of the at least one control parameter, the at least one multimedia file, or preset schedule time from a user terminal device (such as a smart phone or mobile pad of the user) or a cloud server through the receiver 130 by a wireless communication manner. For example, the user terminal device may install the application corresponding to the projector 100. The user may set the data of the at least one control parameter for the sleep aid mode or/and set the at least one multimedia file to be played in the sleep aid mode by operating the application of the user terminal device. By Internet, for example WiFi, the at least one control parameter of the sleep aid mode and/or the at least one multimedia file directly are/is transmitted from the user terminal device to the projector 100. In other embodiments, The user presses a button 180 of the projector 100 to set the projector 100 in sleep aid mode.

In other embodiments, the configuration of the at least one control parameter and/or the multimedia file set in the user terminal device may also be transmitted from the user terminal device to the cloud server first, and the user then downloads the set configuration of the at least one control parameter or/and multimedia file to the projector 100 through the cloud server. In other embodiments, the multimedia file may, for example, be pre-recorded by the user or others and stored in the user terminal device or the cloud server to be played/projected when the projector 100 of the projection system is in sleep aid mode. For example, a video and audio file with specific content recorded by parents for children serves as the multimedia file.

The processor 110 may confirm whether a first triggering event to trigger the projection system 10 to enter the sleep aid mode is detected. If the processor 110 confirms that the first triggering event occurs, the processor 110 may correspondingly turn on the sleep aid mode of the projection system 10 in response to the first triggering event. The first triggering event may include but not limited to detection of an operation by the user on the physical button 180 disposed on the projector 100, detection of a voice command indicating activation of the sleep aid mode through the microphones 300 and 170, or an end of the preset schedule time set by the user terminal device (smart phone) for starting the sleep aid mode. The above microphones are, for example, the microphone 170 embedded in the projector 100, a microphone embedded in a head-mounted device (not shown), or the microphone 300 connected to the outside of the projector 100 (for example, a microphone installed in a smart speaker).

After the projector 100 of the projection system 10 is in the sleep aid mode, the projection module 150 and/or the speaker 160 may play at least one multimedia image and sound for sleep assistance according to the at least one control parameter, and enable the processor 110 to adjust the at least one parameter value of the at least one control parameter to correspondingly adjust playback of the multimedia image and sound.

In an embodiment, the processor 110 may adjust the at least one parameter value of the at least one control parameter according to an activity level of the user. Specifically, the projector 100 of the projection system 10 is in the sleep aid mode, the user may wear the wearable device 200 including a sensor 210. The sensor 210 may detect the activity level of the user to generate a detection signal. The projector 100 may receive the detection signal from the sensor 210 through the receiver 130, and the processor 110 receives the detection signal and adjusts the at least one parameter value of the at least one control parameter according to the detection signal. For example, if the projection system 10 is in the sleep aid mode, the sensor 210 detects that the activity level of the user gradually decreases, which indicates that the user is gradually falling asleep but not in the sleep state. Accordingly, the processor 110 may gradually reduce the blue light energy generated by the light source module 140 or gradually reduce the sound volume of the multimedia file played by the speaker 160. In this embodiment, for example, a proportion of the blue light in the illumination beam is reduced by reducing the control signal (such as the current value of the pulse-width modulation (PWM) signal) provided to the blue light emitting element B in the light source module 140, and the color temperature of the image of the multimedia file tends to be in a yellow spectrum by reducing the blue light energy, which may prevent melatonin of the user from being suppressed, thereby improving a negative impact of a conventional sleep assisting device on sleep.

Specifically, the sensor 210 in the wearable device 200 may include a microphone, a wireless physiological feature transceiver, an electrode, or an optical sensor. When the sensor 210 includes the microphone, the activity level of the user may include voice volume of the user or a noise level generated by a body movement of the user. When the sensor 210 includes the wireless physiological feature transceiver, the activity level of the user may include physiological feature parameters such as a heart rate or a respiratory rate determined by a radio frequency reflection signal obtained by the wireless physiological feature transceiver. When the sensor 210 includes the electrode, the activity level of the user may include the physiological feature parameters such as the heart rate or the respiratory rate determined by an electrocardiogram (ECG) signal obtained by the electrode. When the sensor 210 includes the optical sensor, the activity level of the user may include the physiological feature parameters such as the heart rate or the respiratory rate determined by a photoplethysmography (PPG) signal obtained by the optical sensor. In addition, the microphone 170 embedded in the projector 100 may also be used to detect the activity level of the user, such as the voice volume of the user or the noise level generated by the body movement of the user. The processor 110 receives the detection signal from the microphone 170 and adjusts the at least one parameter value of the at least one control parameter according to the detection signal.

In an embodiment, the projection system 10 may further include a sensing element 400. The projector 100 may be communicatively connected to the sensing element 400. The user may place the sensing element 400 beside or adjacent to the user. The sensing element 400 may detect the activity level of the user to generate the detection signal. If the projection system 10 is in the sleep aid mode, the sensing element 400 detects that the activity level if the user gradually decreases, which indicates that the user is gradually falling asleep. For example, the sensing element 400 is placed under a mattress of the user to detect the number of times the user rolls over. If the number of times the user rolls over gradually decreases, it indicates that the user is gradually falling asleep. The projector 100 receives the detection signal from the sensing element 400, and the processor 110 receives the detection signal and adjusts the at least one parameter value of the at least one control parameter according to the detection signal. The detail description is below.

In an embodiment, the processor 110 may adjust the at least one parameter value of the at least one control parameter according to an execution time of the sleep aid mode. For example, the processor 110 may obtain the configuration of the at least one control parameter set by the user through the receiver 130. The configuration may be associated with the execution time of the sleep aid mode. As the execution time of the sleep aid mode increases, the processor 110 may gradually reduce the at least one parameter value of the at least one control parameter such as the blue light energy or the sound volume with the execution time based on the configuration. In more detail, the multimedia file comprises multimedia image, if the sleep aid mode is turned on at an initial time point, the brightness of the multimedia image at the initial time point is defined as 100%. At a first time point, the brightness of the multimedia image being played is reduced to 80%. At a second time point, the brightness of the multimedia image being played is reduced to 60%. At a third time point, the brightness of the multimedia image being played is reduced to 20%. The first time point, the second time point, and the third time point are the time points when the execution time of the sleep aid mode is from less to more.

The processor 110 may confirm whether a second triggering event to trigger the projection system 10 to turn off the sleep aid mode or stop playing the multimedia image is detected. If the processor 110 confirms that the second triggering event occurs, the processor 110 may correspondingly turn off the sleep aid mode of the projection system 10 in response to the second triggering event. For example, the processor 110 may control the projection module 150 to stop playing the multimedia file and turn off the sleep aid mode of the projection system 10 in response to the second triggering event. The second triggering event may include but is not limited to an end of the preset schedule time for stopping the sleep aid mode.

In an embodiment, the second triggering event may include that no user response is detected. Specifically, the processor 110 may control the speaker 160 to output an inquiry message according to the execution time of the sleep aid mode. The inquiry message is to ask the user whether to continue to execute the sleep aid mode in a voice manner. The processor 110 may detect the user response corresponding to the inquiry message through the microphone 170 or the microphone 300. If the processor 110 confirms the user response, the processor 110 continues to execute the sleep aid mode of the projection system 10 according to the user response. If the processor 110 does not detect the user response, the processor 110 determines that the user is in the sleep state, and stops executing the sleep aid mode of the projector 100 of the projection system 10. In another embodiment, the inquiry message is to ask the user whether to continue to execute the sleep aid mode in a form of text display on OSD (on screen display) of the projector 10. If the processor 110 does not detect the user response, the processor 110 determines that the user is in the sleep state, and stops executing the sleep aid mode of the projector 100 of the projection system 10.

In an embodiment, the storage medium 120 may store a machine learning model. The processor 110 may use a predictive method to determine the preset schedule time for stopping the sleep aid mode. Specifically, the processor 110 may record a detection result (for example, the user response is detected or not detected) of the user response and the time (for example, the time when the detection of the user response is performed) corresponding to the detection result as a piece of data in the storage medium 120 after outputting the inquiry message each time. After obtaining multiple pieces of data, the processor 110 may predict a time point when the user may enter the sleep state based on a statistical method or a machine learning algorithm based on the pieces of data. The processor 110 may set the predicted time point as the preset schedule time for stopping the sleep aid mode.

FIG. 1B is a schematic view of a projection system according to another embodiment of the disclosure. The projection system 10 may include a projector 100, a sensing element 400 and a processing unit 500. The projector 100 is the same as the projector of FIG. 1A. The sensing element 400. The projector 100 may be communicatively connected to the processing unit 500 and the sensing element 400. The sensing element 400 may detect the activity level of the user to generate the detection signal.

The sensing element 400, for example, is a pressure sensor. The pressure sensor detects variation of pressure to generate a detection signal. The activity level of the user, for example, comprises variation of pressure by rolling over of the user. Besides the processing unit 500 has similar structures and functions of the processor 110 of FIG. 1A, the processing unit 500 includes at least one wireless transmission chip or at least one electrical circuit to execute wireless transmission function. The processing unit 500 transmits the detection signal from the sensing element 400 to the projector 100.

Specifically, the sensing element 400 is placed in or under a mattress when the user lie down on the mattress. The sensing element 400 may detect variation of pressure distribution when the user rolls over on the mattress and generate the detection signal according to the variation of pressure distribution. When the projector 100 of the projection system 10 is in the sleep aid mode, the variation of pressure detected by the sensing element 400 is lower than a predetermined value and the variation of pressure keeps in a predetermined variation range during a predetermined a time period. After that, the user is in the sleep state. In the other embodiment, the processing unit 500 may determine whether the user rolls over, sits up, or leaves the mattress or not. The projector 100 receives the detection signal from the processing unit 500, the processor 110 of the projector 100 receives the detection signal and adjusts the at least one parameter value of the at least one control parameter according to the detection signal. In other embodiments, the variation of pressure is detected by the sensing element 400 and the sensing element 400 generates the detection signal and transmits to the processor 110 of the projector 100. The processor 110 may determine whether the user rolls over, sits up, or leaves the mattress or not. The processor 110 adjusts the at least one parameter value of the at least one control parameter according to the detection signal.

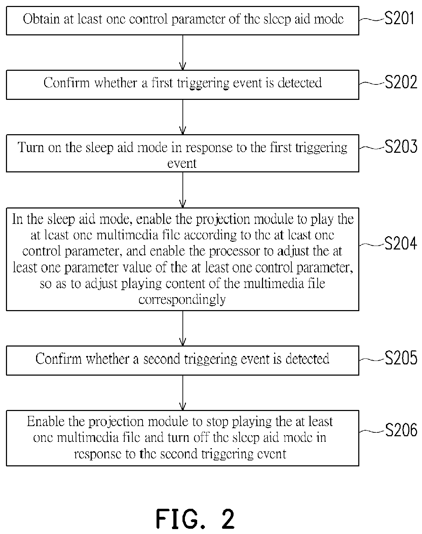

FIG. 2 is a flow chart of a control method according to an embodiment of the disclosure. The control method may be implemented by the projection system 10 shown in FIG. 1A. In step S201, the at least one control parameter of the sleep aid mode is obtained, that is, the processor 110 of the projector 100 may obtain the configuration of the at least one control parameter of the sleep aid mode through the receiver 130. In step S202, it is confirmed whether the first triggering event is detected, that is, the processor 110 of the projector 100 may confirm whether the first triggering event to trigger the projection system 10 to enter the sleep aid mode is detected. If the first triggering event is not detected, the detection carries on. In step S203, the projector 100 turns on the sleep aid mode in response to the first triggering event, that is, if the processor 110 of the projector 100 confirms that the first triggering event occurs, the processor 110 may correspondingly turn on the sleep aid mode of the projection system 10 in response to the first triggering event. The projector100 sets up in the sleep aid mode. In step S204, in the sleep aid mode, the projection module 150 is enabled to play the multimedia file according to the at least one control parameter, and the processor 110 is enabled to adjust the at least one parameter value of the at least one control parameter, so as to adjust playing content of the multimedia file correspondingly. In step S205, it is confirmed whether the second triggering event is detected, that is, the processor 110 of the projector 100 may confirm whether the second triggering event to trigger the projection system 10 to turn off the sleep aid mode or stop playing an image of the multimedia file is detected. If the second triggering event is not detected, the detection carries on. In step S206, in response to the second triggering event, the projection module 150 is enabled to stop playing the multimedia file and turn off the sleep aid mode, that is, if the processor 110 of the projector 100 confirms that the second triggering event occurs, the processor 110 may correspondingly turn off the sleep aid mode and stop projecting at least one multimedia file in response to the second triggering event.

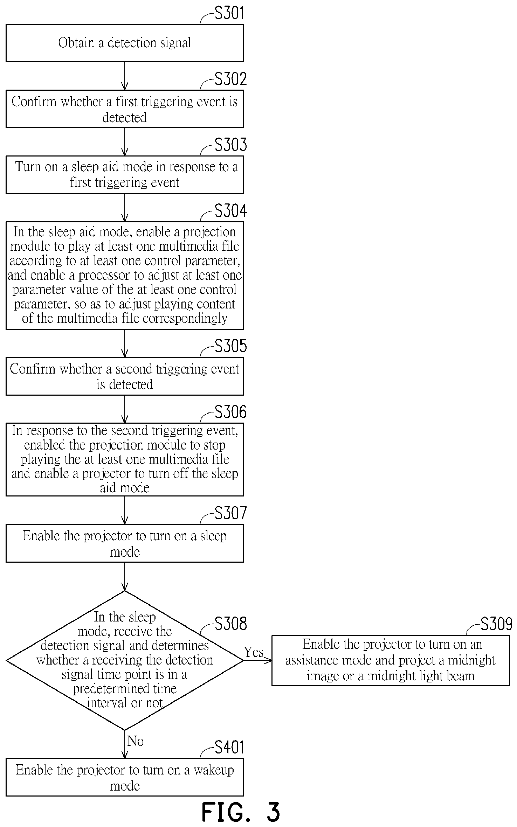

FIG. 3 is a flow chart of a control method according to another embodiment of the disclosure. The control method may be implemented by the projection system 10 shown in FIG. 1A and 1B. In step S301, a detection signal is obtained, that is, the processor 110 of the projector 100 may receive the detection signal provided by a sensing device through the receiver 130. The sensing device, for example, comprises one of the wearable device 200, the microphone 300 and the sensing element 400. The disclosure does not limit the type of the sensing device.

In step S302, it is confirmed whether the first triggering event is detected, that is, the processor 110 of the projector 100 may confirm whether the first triggering event to trigger the projector 100 to enter the sleep aid mode is detected. The projector 100 comprises at least one of a normal mode, a sleep aid mode, a sleep mode, an assistance mode and a wakeup mode. The storage medium 120 of the projector 100 stores at least control parameter corresponding to abovementioned at least one mode. If the first triggering event is not detected, the detection carries on.

In step S303, the projector 100 turns on the sleep aid mode in response to the first triggering event, that is, if the processor 110 of the projector 100 confirms that the first triggering event occurs, the processor 110 may correspondingly turn on the sleep aid mode of the projector100 in response to the first triggering event. The sleep aid mode comprises at least one parameter value of at least one control parameter.

In step S304, in the sleep aid mode, the projection module 150 is enabled to play the multimedia file according to the at least one control parameter, and the processor 110 is enabled to adjust the at least one parameter value of the at least one control parameter, so as to adjust playing content of the multimedia file correspondingly. For example, the processor 110 controls to gradually reduce the sound volume of the multimedia file played by the speaker 160 or gradually reduce brightness of the multimedia file by the projection module 150.

In step S305, it is confirmed whether the second triggering event is detected, that is, the processor 110 of the projector 100 may confirm whether the second triggering event to trigger the projector 100 to turn off the sleep aid mode or stop playing the multimedia file is detected. The second triggering event, for example, comprises that the detection signal includes the variation keeps in a predetermined variation range during a predetermined time period. In another embodiment, the second triggering event represents that the variation of pressure detected by the sensing element 400 is lower than a predetermined value and the variation of pressure keeps in a predetermined variation range during a predetermined time period. If the second triggering event is not detected, the detection carries on.

In step S306, in response to the second triggering event, the projection module 150 is enabled to stop playing the multimedia file and the projector 100 is enabled to turn off the sleep aid mode, that is, if the processor 110 of the projector 100 confirms that the second triggering event occurs, the processor 110 may correspondingly turns off the sleep aid mode and stop projecting at least one multimedia file in response to the second triggering event.

In step S307, when the projector 100 turns off the sleep aid mode, the projector 100 is enabled to turn on the sleep mode. The user is in the sleep state, the projector 100 is standby in the sleep mode. In the sleep mode, the light source module 140 of the projector 100 does not provide an illumination beam such that the projection module 150 does not project the at least one multimedia file. The projector 100 just maintains electrical power to operate the processor 110 and the receiver 130. The receiver 130 still receives the detection signal provided by the sensing device.

In step S308, when the projector 100 is in the sleep mode, the projector 100 receives the detection signal. The detection signal comprises the variation detected by the sensing device, the variation is over a predetermined variation range during a predetermined time period. That means the user starting activity. After that, the processor 110 determines whether a receiving the detection signal time point is in a predetermined time interval (a first predetermined time interval) or not, wherein the time point is at the time of the processor 110 receiving the detection signal. For example, the predetermined time interval is a time interval between 12:00AM~05:00PM. Therefore, the processor 110 may recognize that the user gets up to restroom or drinks water in the midnight. In the embodiment, a timer (no shown) is disposed in the projector 100, the processor 110 may automatically set the time interval according to an instruction of a manufacturer, or the user may set the time interval by the timer.

After processing step S308, if yes. In step S309, the projector 100 is enabled to turn on the assistance mode. In the assistance mode, the projector 100 projects a midnight image of a multimedia file or a midnight light beam of a multimedia file. The midnight image, for example, comprises an image of a multimedia file with warm color temperature (warm colour tone) and gentle brightness. The image may have at least one pattern. The pattern may be at least one star, galaxy or sea. In the embodiment, the at least one control parameter corresponding to the assistance mode is smaller than the at least one control parameter corresponding to the sleep aid mode. In other words, the brightness and the color temperature of the midnight image in the assistance mode are smaller than in the sleep aid mode. For example, the brightness of the midnight image in the assistance mode is less than or equal to 80% of the brightness of projected image in the sleep aid mode. Therefore, in the assistance mode, the user's temporary activity does not be disturbed by the midnight image or the midnight light beam. In another embodiment, the projector 100 projects the midnight light beam without any image information. When the user goes back to the bed and falls asleep, the variation of the detection signal detected by the sensing device is in the predetermined variation range during the predetermined time period. The projector 100 is in the sleep mode. If no. It means that the user wakes up to start activity.
In step S401, the projector 100 is enable to turn on the wakeup mode. The brightness and color temperature of the multimedia file projected by the projector 100 depends on brightness and color temperature of the sunlight emitting indoor. The projector 100 also comprises light sensor for sensing environmental brightness and color temperature. Besides, the brightness and color temperature of projected image in the wakeup mode is larger than the brightness and color temperature of projected image in the sleep aid mode.

Based on the above, the projection system in the disclosure may decide to turn on or turn off the sleep aid mode according to the triggering events. Compared to sleep aid applications on smartphones, the projection system may reflect characteristics of the light beam to reduce the image of the light beam on sleep. In the sleep aid mode, the projector may play/project the multimedia file for sleep assistance, and adjust the at least one control parameter used to play the multimedia file according to the time or the activity level of the user, so as to create a more suitable environment for the user to enter the sleep state at the moment. The user may turn on the sleep aid mode of the projector of the projection system by pressing the button, voice, setting the preset schedule time, etc. In the sleep aid mode, the projection system may ask the user through the voice to confirm whether the user is asleep, and then decide whether to turn off the sleep aid mode. Accordingly, the projection system in the disclosure may not only provide the user with customized sleep aid procedures, but also save power consumption and prolong the service life of the projector.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the present disclosure is intended to be dedicated to the public regardless of whether the element or component is explicitly recited in the following claims.

## Claims

1. A projection system (10), comprising a projector (100), wherein the projector (100) comprises a projection module (150) and a processor (110), the processor (110) is electrically coupled to the projection module (150), and wherein the projector (100) is configured to confirm whether a first triggering event is detected (S202), and turn on (S203) a sleep aid mode of the projector (100) in response to the first triggering event, wherein the sleep aid mode corresponds to at least one control parameter, and wherein
in the sleep aid mode, the projector (100) is configured to enable the projection module (150) to play (S204) at least one multimedia file according to the at least one control parameter corresponding to the sleep aid mode, and the projector (100) is configured to enable the processor (110) to adjust at least one parameter value of the at least one control parameter to adjust the at least one multimedia file correspondingly, and wherein the projector (100) is configured to confirm whether a second triggering event is detected (S205), and the projector (100) is configured to enable (S206) the projection module (150) to stop playing the at least one multimedia file and turn off (S206) the sleep aid mode in response to the second triggering event.

2. The projection system according to claim 1, further comprising a wearable device (200) communicatively connected to the projector (100), wherein the wearable device (200) is configured to detect an activity level and generate a detection signal, and the processor (110) is configured to adjust the at least one parameter value of the at least one control parameter according to the detection signal.

3. The projection system according to claim 1 or 2, wherein the projector (100) is configured to receive the at least one control parameter of the sleep aid mode from a user terminal device or a cloud server by a wireless communication manner.

4. The projection system according to any one of the preceding claims, wherein the processor (110) of the projector (100) is configured to adjust the at least one parameter value of the at least one control parameter according to an execution time of the sleep aid mode.

5. The projection system according to any one of the preceding claims, wherein the at least one control parameter comprises at least one of the following at least one color value, at least one color temperature, illumination, brightness, blue light energy, and sound volume.

6. The projection system according to any one of the preceding claims, wherein the projector (100) further comprises a light source module (140), the at least one control parameter comprises blue light energy, and in the sleep aid mode, the processor (110) is configured to control a blue light emitting element of the light source module (140) to adjust at least one parameter value of the blue light energy.

7. The projection system according to any one of the preceding claims, wherein the first triggering event comprises at least one of the following:
a detection of an operation on a button (180), detection of a voice command, and an end of a preset schedule time; and/or
the button provided by the projector (100) is a physical button, and the processor (110) is configured to correspondingly turn on the sleep aid mode in response to detecting the operation of the physical button.

8. The projection system according to any one of the preceding claims, further comprising:
a microphone (300) communicatively connected to the processor (110) of the projector (100), wherein the processor (110) is configured to detect the voice command through the microphone (300) and/or
the projector (100) further comprises a speaker (160) electrically coupled to the processor (110), wherein the processor (110) is configured to control the speaker (160) to output an inquiry message according to an execution time of the sleep aid mode, and the processor (110) is configured to detect the response in response to the inquiry message.

9. The projection system according to any one of the preceding claims, wherein the second triggering event comprises at least one of the following an end of a preset schedule time, a detection of no response and a detection signal corresponding to a variation maintaining in a variation range during a time period.

10. The projection system according to any one of the preceding claims 2-9, wherein the wearable device (200) comprises a sensor (210) to detect the activity level, and the sensor (210) comprises at least one of the following:
a microphone (300), a wireless transceiver, an electrode, and an optical sensor.

11. The projection system according to any one of the preceding claims 2-10, wherein the activity level comprises at least one of the following:
voice volume, a heart rate, a pressure variation of a posture, and a respiratory rate of a user.

12. The projection system according to any one of the preceding claims, further comprising: a sensing element (400), wherein the sensing element (400) is a pressure sensor, the pressure sensor is configured to detect a variation of pressure to generate a detection signal.

13. The projection system according to any one of the preceding claims, wherein the projector (100) further comprises at least one of a normal mode, a sleep mode, an assistance mode and a wakeup mode; and/or the projector (100) is configured to execute the assistance mode, the projector (100) is configured to project a midnight image or a midnight light beam, and during a time period, a detection signal corresponding to a variation maintains in a variation range such that the projector is configured to execute the sleep mode.

14. A control method of a projection system, wherein a projector (100) of the projection system comprises a projection module (150) and a processor (110), the processor (110) is electrically coupled to the projection module (150), and the control method comprises:
confirming whether a first triggering event is detected (S202, S302);
turning on a sleep aid mode of the projector (100) in response to the first triggering event (S203, S303), wherein the sleep aid mode corresponds to at least one control parameter;
in the sleep aid mode, enabling the projection module (150) to play at least one multimedia file according to the at least one control parameter, and enabling the processor (110) to adjust at least one parameter value of the at least one control parameter to adjust the at least one multimedia file correspondingly (S204, S304);
confirming whether a second triggering event is detected (S205, S305); and
enabling the projection module (150) to stop playing the at least one multimedia file and turn off the sleep aid mode in response to the second triggering event (S206, S306).

15. The control method of the projection system according to claim 14, further comprising:
receiving the at least one control parameter of the sleep aid mode from a user terminal device or a cloud server by a wireless communication manner and/or a method of enabling the processor to adjust the at least one parameter value of the at least one control parameter to adjust the at least one multimedia file correspondingly comprises:
detecting an activity level and generating a detection signal, wherein the activity level comprises at least one of voice volume, a heart rate, a pressure variation of a posture and a respiratory rate of a user; and
transmitting the detection signal to the processor, so that the processor is configured to adjust the at least one parameter value of the at least one control parameter according to the detection signal.
